# EUROPEAN PATENT APPLICATION

(11) **EP 4 368 643 A1**
(43) Date of publication of application: **15.05.2024**
(21) Application number: 21949450.7
(22) Date of filing: 22.12.2021
(51) Int. Cl.: C08B 37/08, C08B 37/00

(54) **HIGH-SWELLING HYALURONIC ACID BEAD GEL**

(30) Priority: 08.07.2021 KR 20210090011
(71) Applicant: Yu Co., Ltd., Ulsan 44496 (KR)
(72) Inventor: WOO, Sang Uk, Ulsan 44705 (KR); CHO, Kwang Yong, Ulsan 44715 (KR)
(74) Representative: Gulde & Partner
(86) International application number: PCT/KR2021/019626
(87) International publication number: WO 2023/282413

(57) **Abstract**

The present invention relates to a homogeneous spherical hyaluronic acid bead gel having a swelling degree of 4,500%-10,000%, which is prepared through a mixed crosslinking reaction step, a second step of crosslinking reaction of a dispersed crosslinking reaction, and a third step of purification reaction, wherein the ratio of the reaction time in the mixed crosslinking reaction step to the reaction time in the dispersed crosslinking step is 1:24 to 1:72. According to the method for preparing a hyaluronic acid bead gel of the present invention, it is possible to prepare a transparent, homogeneous bead gel with a high swelling degree. The hyaluronic acid spherical bead gel has a transparent spherical shape with a selected size, exhibits a decomposition period, viscoelasticity, and a swelling degree, has excellent biocompatibility, and is very stable against heat and enzymes.

## Description

### [Technical Field]

Hyaluronic acid (HA) (Hyaluronan, (C14H20NNaO11)n (n > 1000)) is a polymer present in the living body and is a polysaccharide called glycosaminoglycan. The hyaluronic acid has a structure in which D-glucuronic acid and N-acetylglucosamine are repeatedly linked through the bond between β and β. In addition, the hyaluronic acid is a wide range of linear polysaccharides that are water-soluble, have very high viscosity and high elasticity, and have a molecular weight in a range of 1,000 to 10,000,000 Da (daltons).

The hyaluronic acid has very desirable advantages in terms of efficacy and physical properties, such as a very excellent lubricating function in a physical friction state and a protective effect against invasion of bacteria, etc., due to a strong moisturizing effect, and therefore has wide applications for cosmetic and medical purposes.

To develop such hyaluronic acid, biological tissue extraction methods or microbial culture methods are basically used. However, recently, microbial culture production methods that can control molecular weight and productivity and obtain high-quality raw materials, have become more popular than extraction methods from chicken combs due to many disadvantages such as virus invasion, impurities, and inflammatory reactions.

In particular, it is a recent trend that development uses are determined depending on a molecular weight range of hyaluronic acid produced by controlling microbial culture. In other words, ultra-low molecular weight hyaluronic acid with an average molecular weight of 100,000 Da or less is mainly used for food or cosmetic purposes, low-molecular weight hyaluronic acid with an average molecular weight of 1 million Da is also used as a raw material for eye drops or as a target for developing derivatives, and hyaluronic acid with an average molecular weight of 3 to 4 million Da has high utility as a raw material for knee joint injections.

In addition, the use of the hyaluronic acid as an ophthalmic surgical aid has also been increased, and ultrahigh molecular weight of hyaluronic acid in the body has been prominent as a raw material for an anti-adhesive agent.

However, the hyaluronic acid is susceptible to degradation in the living body or under conditions such as acid and alkali, and has poor processability, which limits its development for various applications. Therefore, efforts to develop materials that structurally stabilized hyaluronic acid have been widely conducted.

Crosslinked hyaluronic acid has been developed for a variety of applications, including an anti-adhesive agent in a form of film or gel for preventing adhesion after surgery, a filler for wrinkle removal, an implant, a joint injection, a drug delivery matrix, and a cell scaffold. In particular, research has been actively conducted recently on its use as a filler for wrinkle removal and a cosmetic aid, etc., for commercial purposes.

### [Background Art]

Commonly known methods for preparing beads composed of crosslinked hyaluronic acid include a combination of chemical and physical methods. As methods for separating the beads, precipitating through a micro nozzle, lipidizing and encapsulating the outside, dispersing solubilized biodegradable polymers using a surfactant and then obtaining them by solvent extraction and evaporation, etc., are known.

In order to increase the uniformity of particles by physical methods, it is affected by a shape and a stirring speed of an impeller, but in most cases, a high stirring speed should be maintained. The method using a micro nozzle produces an appearance similar to a pomegranate fruit and does not maintain a perfect spherical shape, and when spherical beads are obtained by lipidizing and encapsulating the outside, they are broken by physical external forces and the liquid inside flows out, and when using a solvent extraction and evaporation method, surfactants and organic solvents that are harmful to the human body are essentially used, so their complete removal is required in the final product.

Other common methods for preparing beads composed of crosslinked hyaluronic acid include using excessive amounts of cationic materials to form an insoluble precipitate through ionic bonding with anionic hyaluronic acid, or using excessive amounts of crosslinking agents to form insoluble forms and then drying them to physically particulate them, or binding hydrophobic materials to a carboxyl group of hyaluronic acid to form microbeads using emulsifiers, etc., in two different solvents subjected to phase separate after being dissolved in an organic solvent, and recovering the microbeads by a solvent extraction method, etc. For example, U.S. Patent Nos. 6,066,340 and 6,039,970 disclose the use of a hyaluronic acid derivative synthesized by coupling reaction of ethyl alcohol or benzyl alcohol with the carboxyl group of hyaluronic acid. This material is insoluble in water but soluble in organic solvents such as dimethyl sulfoxide. There are examples of preparing solid-phase microbeads using such hydrophobic hyaluronic acid derivatives by an emulsion solvent extraction method.

In addition, research has been conducted on preparing beads with chitosan and using them as a drug delivery medium (S. T. Lim, G. P. Martin, D. J. Berry and M. B. Brown, Journal of Controlled Release, 2-3, 66(2000), 281-292, S. T. Lim, B. Forbes, D. J. Berry, G. P. Martin and M. B. Brown, International Journal of Pharmaceutics, 1, 231(2002), 73-82) .

In addition, the literature related to a preparation of hyaluronic acid beads crosslinked by 1,3-butadiene diepoxide discloses that under the conditions of crosslinking reaction by adding 1,3-butandiene diepoxide after stirring a mixture of hyaluronic acid and vegetable oil in an alkaline aqueous solution, when 0.4 mL of excess 3-butandiene diepoxide (approximately 800 mol% relative to the crosslinking reaction site) is applied to 100 mg of hyaluronic acid, the hyaluronic acid beads are too hard and have an uneven shape with swelling (%) of around 500%, and there are limitations in application due to the use of an excessive crosslinking agent (Polymer(Korea), Vol. 29, No.5, pp445-450, 2005).

In addition, the method for preparing hyaluronic acid microbeads includes a method of dropping drops of a hyaluronic acid aqueous solution into a stirring crosslinking solution through a nozzle under the pressure of compressed air through a microbead generator to prepare hyaluronic acid microbeads. But the method uses divinyl sulfone as a crosslinking agent, which may lead to safety issues, has poor uniformity in particle size and shape, and requires the use of expensive equipment (Biomaterials Research (2009) 13(3): 105-108, Biomaterials Research (2010) 14 (4) : 157-160, Chun et al, Biomaterials Research (2016) 20:24, Microbeads based on polysaccharides and method for preparing them (Korea Patent No. 1005489650000 (January 26, 2006)).

In the prior art (Biomaterials Research (2010) 14(4): 157-160), the particle shape and size are determined at the moment a drop of the hyaluronic acid aqueous solution falls on a stirrer through a nozzle under the pressure of compressed air in the microbead generator, so a problem of poor uniformity in the particle shape and size may occur.

The crosslinking agent remain as residues in the hyaluronic acid or a salt thereof, and there is a risk of reacting with substances in vivo. In particular, when divinyl sulfone is used as a crosslinking agent, it is known that cytotoxicity may be caused by unreacted divinyl sulfone, so there is a problem that it is necessary to perform a complex process to reduce the reactive crosslinking agent (Journal of KIPS, Vol. 11. No. 03. Volume 30. (2009), Analysis on method for preparing hyaluronic acid microbeads).

In the prior art (Biomaterials Research (2010) 14(4): 157-160), since divinyl sulfone is used as a crosslinking agent, problems related to human safety such as cytotoxicity may occur, and since it is necessary to perform a complicated process to reduce the amount of the reactive crosslinking agent, the efficiency of the preparing process may also be reduced.

Further, the prior art is a method for preparing solid-phase bead-type emulsion beads by dropping them into a frozen refrigerant at -10° C to -200° C, which has limited use in applications because it contains many components and has no purification process (Method of preparing bead-type emulsion beads by freezing at low temperature and obtained bead-type emulsion beads, Korea Patent No. 1015532330000 (September 9, 2015)).

In addition, the literature related to the preparation of hyaluronic acid beads crosslinked by BDDE discloses a preparation method in which hyaluronic acid is dissolved in an alkaline aqueous solution at 10° C overnight to reduce its molecular weight, and then an excess of BDDE (20 mg of BDDE per 100 mg of hyaluronic acid, approximately 40 mol% relative to the crosslinking reaction site) is added, stirred and reacted in olive oil to react, and then recovered through a filter, and purified with a 70% solution of aqueous acetone, distilled water, and phosphate buffer saline (PBS), wherein the prepared hyaluronic acid beads have a high chemical strain of close to 20 to 30% and a low swelling of 18.99 to 23.02, so they are too hard and have uneven shape, which has limited use in applications.

In addition, the prior art is a method for preparing crosslinked hyaluronic acid by performing a crosslinking reaction with ligands of the group consisting of alendronate (ALD), adenosine diphosphate (ADP), and adenosine triphosphate (ATP) as a crosslinking agent, dissolving the crosslinked hyaluronic acid, and then dropping it on polyvalent cations to prepare nano/microbeads, which has limited use in applications due to safety and stability issues (Method for preparing hyaluronic acid microbead and use of the hyaluronic acid microbead, Korea Patent No. 1021085520000 (April 29, 2020)).

However, hyaluronic acid is a highly hydrophilic material, and has been limited in its ability to prepare uniform spherical beads that are transparent and have a high swelling using the commonly known methods. The hydrophilicity of hyaluronic acid in an aqueous solution phase within an oil phase was quite high, making it difficult to remove moisture by a solvent evaporation method, and when an organic solvent was added by the solvent extraction method, the particles tangled with each other, making it impossible to prepare uniformly sized beads. In addition, currently known methods for preparing hyaluronic acid beads have included using excessive amounts of cationic materials to form an insoluble precipitate through ionic bonding with anionic hyaluronic acid, or using excessive amounts of crosslinking agents to form insoluble forms and then drying them to physically particulate them, or binding hydrophobic materials to a carboxyl group of hyaluronic acid, dissolving them in an organic solvent, and then preparing them by the solvent extraction method, which have shown limitations in applications as the particles are quite small in size, have a non-uniform shape, and are hard opaque particles with very low swelling in aqueous solution.

Due to the unique material properties of hyaluronic acid as described above, the prior arts were not applicable to a process for preparing beads with a very high swelling in aqueous solution while maintaining a uniform spherical shape and transparency.

### [Disclosure]

### [Technical Problem]

An object of the present disclosure is to provide a hyaluronic acid bead gel that has a uniform spherical shape, is transparent, and has a high swelling in order to solve these problems of the prior art.

In other words, an object of the present disclosure to provide a spherical hyaluronic acid bead gel that may be usefully used in medical devices, pharmaceuticals, cosmetics, food industries, etc., because of excellent biocompatibility in various environments in vivo and ex vitro due to a uniform spherical shape and size control, control of a decomposition period of a hyaluronic acid spherical bead gel through crosslinking, a high swelling property in aqueous solutions, and excellent physical stability, is transparent, has a high swelling, and is uniform.

The present disclosure relates to a spherical hyaluronic acid bead gel that is a transparent and has a very high swelling and a uniform spherical form, which is obtained by performing a crosslinking reaction again while dispersed in oil after a crosslinking reaction. The spherical hyaluronic acid bead gel that is a transparent and has a high swelling and a uniform spherical form according to the present disclosure may be prepared by adjusting a ratio of oil and hyaluronic acid solution without using emulsifiers, surfactants, solubilizers, etc.

A spherical hyaluronic acid bead gel with a high swelling may be prepared through a dispersed crosslinking reaction in a hyaluronic acid solution dispersed in an oil phase without additives, and may be prepared by applying a three-step purification method to remove impurities such as oil and unreacted substances to prepare a transparent bead gel.

Therefore, a method for adding synthetic polymers such as PLGA and PCL, which are materials for shell formation, a method for preparing insoluble precipitates through ionic bonding, a method of precipitation in organic solvents, etc., are not used.

The spherical hyaluronic acid bead gel with a high swelling according to the present disclosure has a transparent spherical shape with a selected size, exhibits a selected size, a decomposition period, viscoelasticity, and a swelling, has excellent biocompatibility, and is very stable against heat and enzymes. The transparent, spherical hyaluronic acid bead gel with a spherical shape according to the present disclosure with these properties may be used in a variety of application, including a filler for wrinkle removal, an implant, a drug delivery matrix, a cell carrier, a cell scaffold, a joint injection, a cosmetic product, etc.

In principle, the spherical hyaluronic acid bead gel with a high swelling according to the present disclosure is prepared without applying conventional preparing methods, that is, a method of lipidizing and encapsulating the outside of spherical beads, a method of using emulsifiers and surfactants, etc., a method of using an excess of crosslinking agent to create an insoluble form and dry it, and physically particulate it, and a preparation method that combines hydrophobic substances, dissolves them in an organic solvent, and then performs phase separation.

### [Technical Solution]

In order to solve the technical problem, the present disclosure provides a hyaluronic acid bead gel that has a swelling of 4,500% to 10,000% and is uniform and spheical shape, and the hyaluronic acid bead gel may be prepared through a two-step crosslinking reaction of a mixed crosslinking reaction step and a dispersed crosslinking reaction step and a three-step purification reaction, wherein a ratio of a reaction time in the mixed crosslinking reaction step to a reaction time in the dispersed crosslinking step may be 1:24 to 1:72.

As an embodiment of the present disclosure, the mixed crosslinking reaction step may be a reaction step of obtaining a reactant by adding hyaluronic acid or a salt thereof to an alkaline aqueous solution, adding a crosslinking agent, and then homogeneously mixing and reacting them with each other and the dispersed crosslinking reaction step may be a step of forming covalent crosslinking bonds by stirring the reactant with oil.

As another embodiment of the present disclosure, the crosslinking agent in the mixed crosslinking reaction step may be added in an amount ranging from 1 to 30 equivalent % based on a repeating unit of the hyaluronic acid or a salt thereof. If the concentration of the crosslinking agent is within the above range, it is desirable to prepare a bead gel with a high swelling and good shape retention and thus high physical stability. On the other hand, if the concentration of the crosslinking agent is less than 1 equivalent %, it is undesirable due to the disadvantages of easy degradation and poor shape retention. If the concentration of the crosslinking agent exceeds 30 equivalent %, it is undesirable because the frequency of side effects is increased due to the use of high concentration of the crosslinking agent, and also, the convenience of use is reduced due to hard properties having a low swelling.

As an embodiment of the present disclosure, a concentration of the hyaluronic acid or a salt thereof in the reactant in the mixed crosslinking reaction step may be added in a range of 1 to 30% by weight based on the 0.1 to 10 N of alkaline aqueous solution. If the concentration of the hyaluronic acid or a salt thereof is within the above range, it is desirable because homogeneous mixing and reaction are possible, and a bead gel with high physical stability is possible due to a high swelling and good shape retention. On the other hand, if the concentration of the hyaluronic acid or a salt thereof is less than 1% by weight, it is undesirable because it is difficult to maintain the shape due to poor crosslinking. If the concentration of the hyaluronic acid or a salt thereof exceeds 30% by weight, it is undesirable because too high a concentration makes homogeneous mixing difficult, resulting in a heterogeneous reaction, and too high crosslinking results in hard properties.

As an embodiment of the present disclosure, in the dispersed crosslinking reaction step, a weight ratio of the alkaline aqueous solution of the hyaluronic acid or a salt thereof to which the crosslinking agent is added and the oil may be in a range of 1:1 to 1:9, preferably from 1:1 to 1:3, and more preferably from 1:1 to 1:2. If a mixing weight ratio of the alkaline aqueous solution of hyaluronic acid or a salt thereof and the oil is within the above range, it is desirable because it is possible to prepare a uniform bead gel with excellent productivity and increase the swelling property of the finally prepared bead gel. On the other hand, if the mixing weight ratio of the alkaline aqueous solution of hyaluronic acid or a salt thereof and the oil is less than 1:1, it is undesirable because the alkaline aqueous solution of hyaluronic acid or a salt thereof is greater than the oil, making it difficult to uniformly disperse in the oil phase due to agglomeration. If the mixing weight ratio of the alkaline aqueous solution of hyaluronic acid or a salt thereof and the oil exceeds 1:9, it is undesirable because the alkaline aqueous solution of hyaluronic acid or a salt thereof is well dispersed uniformly in the oil phase, but productivity is low compared to volume.

Conventionally, the particle shape and size were determined at the moment a drop of the aqueous hyaluronic acid solution fell on a stirrer, so there was a problem of poor uniformity in the particle shape and size. In order to solve such a problem, the present disclosure has a technical distinction in that the particle size and shape may be uniformly formed by dispersion conditions such as the ratio of oil and aqueous solution and a stirring speed after the drop of the aqueous hyaluronic acid solution falls into oil.

In addition, in the present disclosure, without using a microbead generator, a mixed crosslinking reaction is performed before dispersion in oil as a first step, and a dispersed crosslinking reaction is performed in a dispersed state in oil as a second step to achieve a swelling range suitable for the human body while maintaining the uniform spherical shape and physical viscoelasticity of the hyaluronic acid bead gel. Thus, the hyaluronic acid bead gel is much softer than that of the prior art and may significantly reduce irritation when applied subcutaneously.

As an embodiment of the present disclosure, the crosslinking agent may be one or more selected from the group consisting of 1,4-butandiol diglycidyl ether (BDDE), ethylene glycol diglycidyl ether (EGDGE), 1,6-hexanediol diglycidyl ether, propylene glycol diglycidyl ether, polypropylene glycol diglycidyl ether, polytetramethylene glycol diglycidyl ether, neopentyl glycol diglycidyl ether, polyglycerol polyglycidyl ether, diglycerol polyglycidyl ether, glycerol polyglycidyl ether, tri-methylpropane polyglycidyl ether, 1,2-(bis(2,3-epoxypropoxy)ethylene), pentaerythritol polyglycidyl ether, and sorbitol polyglycidyl ether.

Conventionally, there was a problem of cytotoxicity due to the use of divinyl sulfone as a crosslinking agent. However, in the present disclosure, a crosslinking agent replacing divinyl sulfone is used to react with an alcohol group of hyaluronic acid or a salt thereof to form an ether bond, thereby improving reaction efficiency as well as human safety.

As an embodiment of the present disclosure, the oil is one or more selected from the group consisting of mineral oil, medium chain triglycerides, menhaden oil, linseed oil, coconut oil, cod oil, soya bean oil, whale oil, cotton seed oil, sesame seed oil, peanut oil, olive oil, lard oil, palms oil, corn oil, rapeseed oil, bone oil, china wood oil, and castor oil.

As an embodiment of the present disclosure, a three-step purification reaction may include: (a) a first purification step of washing a spherical gel prepared that has undergone the dispersed crosslinking reaction step using one or more selected from distilled water, an acidic solution, an aqueous solution to which an acidic salt is added, and PBS; (b) a second purification step of washing the hyaluronic acid bead gel that has undergone the first purification step with an organic solvent aqueous solution; and (c) a third purification step of washing the hyaluronic acid bead gel that has undergone the second purification step using one or more selected from distilled water, an acidic solution, an aqueous solution to which an acidic salt is added, and PBS.

As an embodiment of the present disclosure, the organic solvent may be one or more selected from DMSO, DMF, acetonitrile, methanol, THF, acetone, an acetone aqueous solution, and an alcohol having 2 to 6 carbon atoms.

As an embodiment of the present disclosure, in the organic solvent aqueous solution used in the second purification step, a weight ratio of distilled water to organic solvent is preferably in a range of 9:1 to 1:9. It is desirable that the weight ratio of distilled water to the organic solvent is within the above range because the bead gel swells appropriately and oil and impurities may be easily removed. On the other hand, if the weight ratio of distilled water to organic solvent is 9:1 or more, it is undesirable because the bead gel does not swell sufficiently due to a high organic solvent weight ratio, which makes it difficult to remove oil and impurities. If the weight ratio of distilled water to organic solvent is less than 1:9, it is undesirable because it becomes difficult to remove oil and impurities due to a low organic solvent weight ratio.

### [Advantageous Effects]

The spherical hyaluronic acid bead gel with a high swelling according to the present disclosure not only has a transparent spherical shape with high purity, uniformity, and selective size, but also has the properties of not degrading its shape even under sterilization conditions at 121° C, and has excellent biocompatibility, viscoelasticity, swelling property, and stability against heat and enzymes.

### [Description of Drawings]

FIG. 1 is a diagram obtained by observing a transparent, spherical hyaluronic acid bead gel swollen in PBS using an optical microscope.
FIG. 2 is a diagram obtained by observing an amorphous hyaluronic acid bead gel prepared in Comparative Example 5 swollen in PBS using an optical microscope.
FIG. 3 is a diagram showing particle size analysis results of a spherical hyaluronic acid bead gel prepared in Example 1.
FIG. 4 is a diagram showing particle size analysis results of a spherical hyaluronic acid bead gel prepared in Example 2.
FIG. 5 is a diagram showing particle size analysis results of a spherical hyaluronic acid bead gel prepared in Example 3.
FIG. 6 is a diagram showing rheological analysis results of the spherical hyaluronic acid bead gels prepared in Examples 1, 2, and 3.
FIG. 7 is a diagram showing extrusion force measurement results of the spherical hyaluronic acid bead gels prepared in Examples 1, 2, and 3.
FIG. 8 is a diagram showing properties of the spherical hyaluronic acid bead gels prepared in Examples 1, 2, and 3 after passing them through a needle.

### [Best Mode]

The present disclosure provides a spherical hyaluronic acid bead gel, which is prepared by adjusting a bead size by the type and relative ratio of hyaluronic acid solution and oil without using an emulsifier in the oil phase in the preparation of the spherical hyaluronic acid bead gel, and chemically combining it with a small amount of a crosslinking agent (polyfunctional epoxide) having at least two epoxy reactors, and a method for preparing the same.

The spherical hyaluronic acid bead gel is not particularly limited in size, but the average diameter of the microparticles is preferably 50 to 2,000 um. Depending on the size of the spherical hyaluronic acid bead gel, the range of medical applications may be varied.

As used herein, the term hyaluronic acid briefly expresses the form of the acid and a salt thereof. The hyaluronic acid includes both inorganic salts such as sodium hyaluronate, potassium hyaluronate, calcium hyaluronate, magnesium hyaluronate, zinc hyaluronate, cobalt hyaluronate, etc., and organic salts such as tetrabutylammonium hyaluronate, etc.

In order to form a spherical hyaluronic acid bead gel that is transparent, has a high swelling, and is uniform, and to have various physical properties and biocompatibility, the molecular weight of the hyaluronic acid or a salt thereof is not particularly limited, and is preferably 100,000 to 5,000,000 daltons.

A method of preparation according to the invention includes: a mixed crosslinking reaction step in which hyaluronic acid or a salt thereof is added to an alkaline aqueous solution and a small amount of a crosslinking agent is added at the same time to uniformly mix the resulting mixture, a dispersed crosslinking reaction step in which the reaction mixture is dispersed in various types of oil, a first purification step in which the reactants that have undergone these reactions are recovered and purified with distilled water or an acidic solution or an aqueous solution to which a salt is added, and PBS to remove unreactants and impurities, a second purification step of purifying the reactants that have undergone the first purification step with an organic solvent aqueous solution, and a third purification step of purifying the reactants that have undergone the second purification step with distilled water, an acidic solution, an aqueous solution to which a salt is added, and PBS.

The spherical hyaluronic acid bead gel according to the present disclosure may further contain other ingredients within the range that does not impair the effect of the present disclosure.

The hyaluronic acid or a salt thereof; the aqueous alkaline solution; and the crosslinking agent, which is uniformly mixed in the mixed crosslinking reaction step, will be described below, respectively.

As used herein, hyaluronic acid is a concept that includes both the form of the acid and a salt thereof, and therefore, in the preparation method of the present disclosure, "hyaluronic acid aqueous solution" includes an aqueous solution of hyaluronic acid, an aqueous solution of a hyaluronic acid salt, and a mixed aqueous solution of hyaluronic acid and a hyaluronic acid salt.

The alkaline reagent used to prepare the alkaline aqueous solution dissolving the hyaluronic acid is not particularly limited, but preferred examples include reagents such as sodium hydroxide, potassium hydroxide, and aqueous ammonia. The concentration of the alkaline aqueous solution is not particularly limited, and a concentration of 0.1 to 10N is preferred for dissolution and crosslinking reaction of the hyaluronic acid.

The crosslinking agent reacts with the alcohol group of the hyaluronic acid or a salt thereof to form an ether bond, thereby forming a crosslinking between the hyaluronic acid or a salt thereof. The reaction of epoxy functional groups with alcohols is known to proceed at high temperatures and alkaline conditions, and as the reaction proceeds, the epoxy functional groups are attached to the hyaluronic acid or a salt thereof, so no by-products are generated. However, if the reaction efficiency is low, unreacted epoxy functional groups of several epoxy functional groups of the crosslinking agent combined with hyaluronic acid or a salt thereof remain in the hyaluronic acid or a salt thereof, and there is a risk that these remaining unreacted epoxy functional groups will react with substances in living body in the future, so additional reactions and processes are required to minimize the remaining unreacted epoxy functional group or to hydrolyze the epoxy functional groups and convert them into inactive functional groups. In addition, if an excessive amount of crosslinking agent is added, there is a significant risk that unreacted crosslinking agent may remain in the crosslinked material of hyaluronic acid or a salt thereof. Therefore, in order to minimize this risk, it is highly desirable to induce a highly efficient reaction using an appropriate amount of crosslinking agent as described in the present disclosure, not only in terms of biocompatibility of the spherical hyaluronic acid bead gel, but also in terms of preparing process efficiency.

In the mixed crosslinking reaction step, the hyaluronic acid or a salt thereof may be added to an alkaline aqueous solution, and a small amount of crosslinking agent may be added at the same time to uniformly mix the resulting mixture.

Meanwhile, in the above dispersed crosslinking reaction step, an alkaline aqueous solution of hyaluronic acid or a salt thereof uniformly mixed with a crosslinking agent is mixed with various types of oil, and then properly stirred and subjected to a crosslinking reaction at a certain temperature. The alkaline aqueous solution of hyaluronic acid or a salt thereof dispersed in the oil phase gradually turns into a high concentration as the solvent evaporates, and the effective reaction concentration increases accordingly, thereby maximizing the efficiency of the reaction, so that a spherical hyaluronic acid bead gel with excellent physical properties may be prepared using a small amount of crosslinking agent. Therefore, since the crosslinking agent is mixed at a low concentration in the mixed crosslinking reaction step, and the crosslinking reaction is carried out at a relatively high concentration as the solvent evaporates in the dispersed crosslinking reaction step, the advantages of using a low concentration of crosslinking agent and the advantages of using a high concentration of crosslinking agent may be taken at the same time. This method for preparing spherical hyaluronic acid bead gel may not only prepare a spherical hyaluronic acid bead gel with strong and special properties, but also have the efficiency of the crosslinking reaction at the same time.

In addition, in the dispersed crosslinking reaction step, the properties of the spherical hyaluronic acid bead gel may also be adjusted by adjusting a mixing time and a ratio of oil to aqueous solution when mixing an alkaline aqueous solution of hyaluronic acid or a salt thereof containing the crosslinking agent with various types of oil.

In the dispersed crosslinking reaction step according to the present disclosure, the mixing may be carried in a weight ratio of an alkaline aqueous solution of hyaluronic acid or a salt thereof to which a crosslinking agent is added and the oil in the range of 1:1 to 1:9, preferably 1:1 to 1:3, and more preferably 1:1 to 1:2. If the mixing weight ratio of the alkaline aqueous solution of hyaluronic acid or a salt thereof and the oil is within the above range, it is possible to prepare an uniform bead gel with excellent productivity, and finally provide a spherical hyaluronic acid bead gel having a swelling of 3,000 to 10,000%, preferably 4,500 to 10,000% that may be applied to the living body, which is a much softer material and may significantly reduce irritation when applied subcutaneously.

The size of the spherical hyaluronic acid bead gel in the absence of emulsifier is controlled by a stirring speed, a type of oil, and a ratio of oil to aqueous solution. The higher the viscosity of the oil phase, the smaller the size of the spherical hyaluronic acid bead gel. This is likely due to the fact that the alkaline aqueous solution of hyaluronic acid and a salt thereof, which has a relatively higher viscosity than the oil phase, is dispersed more smoothly as the viscosity difference between the two phases is reduced.

In addition, the size of the beads may decrease as the stirring speed increases and the viscosity of the alkaline aqueous solution of hyaluronic acid and a salt thereof decreases.

After the dispersed crosslinking reaction step, for recovery of the bead gel, an organic solvent containing such as DMSO, DMF, acetonitrile, methanol, THF, acetone, an acetone aqueous solution, an alcohol having 2 to 6 carbon atoms such as ethanol, or an alcohol aqueous solution may be used.

Through various experiments, the present inventors observed that the physical properties of the prepared spherical hyaluronic acid bead gel vary depending on the mixing properties of the alkaline aqueous solution of hyaluronic acid or a salt thereof with the various organic solvents and oil phase described above, and that the closer a polarity index of the organic solvent is to distilled water, the higher the transparency of the prepared spherical hyaluronic acid bead gel and the lower the complex viscosity, thereby presenting a method for preparing spherical hyaluronic acid bead gel with various properties.

The reaction temperature in the mixed crosslinking reaction step or the dispersed crosslinking reaction step is not particularly limited, but is preferably 5° C to 50° C, and more preferably 15° C to 40° C.

The reaction time of the mixed crosslinking reaction step is preferably from 30 minutes to 4 hours, and more preferably from 1 hour to 2 hours. The reaction time of the dispersed crosslinking reaction step is preferably 5 hours to 72 hours, and more preferably 24 hours to 72 hours. Therefore, the ratio of the reaction time of the above mixed crosslinking reaction step to the reaction time of the above dispersed crosslinking reaction step is preferably 4:5 to 1:144, and more preferably 1:24 to 1:72.

Although the reaction time for the generation of crosslinks in the mixed crosslinking reaction step or the dispersed crosslinking reaction step is not particularly limited. However, if the reaction time is excessively long, there may be a problem in that the hyaluronic acid may be hydrolyzed under alkaline conditions, resulting in a lower physical viscoelasticity of the prepared spherical hyaluronic acid bead gel.

Therefore, by limiting the ratio of the reaction time of the mixed crosslinking reaction step and the dispersed crosslinking reaction step as described above, it is possible to prepare a hyaluronic acid bead gel that may maintain the shape of the hyaluronic acid bead gel in a uniform spherical shape, have excellent physical viscoelasticity, and have a high swelling.

As shown above, in the present disclosure, the crosslinking reaction step may be carried out separately into two steps: a mixed crosslinking reaction step and a dispersed crosslinking reaction step.

First, by performing the mixed crosslinking reaction step separately, it is possible to maintain the uniform shape of the hyaluronic acid bead gel as much as possible while using a small amount of crosslinking agent, and stably prepare hyaluronic acid gel by increasing the viscoelasticity even at a relatively low content of hyaluronic acid.

Subsequently, the hyaluronic acid gel, which has become high viscoelasticity even with a relatively low hyaluronic acid content, is stirred with oil to form a bead shape, and through a dispersed crosslinking reaction to form covalent crosslinks, a hyaluronic acid bead gel having a swelling in the range of 4,500 to 10,000% that may be applied to the living body as described above may be prepared.

As such, in the present disclosure, the crosslinking reaction is carried out separately in two-steps: a mixed crosslinking reaction step and a dispersed crosslinking reaction step. Through the first step of a mixed crosslinking reaction, a hyaluronic acid gel is formed with relatively high viscoelasticity compared to the relatively low hyaluronic acid content, and in the second step of the dispersed crosslinking reaction, by adjusting the ratio of the hyaluronic acid gel and the oil, it is possible to stably produce a hyaluronic acid bead gel with a high swelling suitable for the human body and a uniform bead shape, thereby obtaining the effect of increasing productivity.

Specifically, the viscoelasticity of the hyaluronic acid gel formed in the mixed crosslinking reaction step may be expressed as a complex modulus, a storage modulus, and a loss modulus, and the excellence of elasticity may be expressed by a ratio of storage modulus to loss modulus.

After the mixed crosslinking reaction and dispersed crosslinking reaction of the hyaluronic acid or a salt thereof, an organic solvent or an organic solvent aqueous solution is used to remove oil from the spherical hyaluronic acid bead gel product. The organic solvent or organic solvent aqueous solution may be an alcohol or alcohol aqueous solution having 2 to 6 carbon atoms, such as diethyl ether, DMSO, DMF, acetonitrile, methanol, THF, acetone, an acetone aqueous solution, an alcohol having 2 to 6 carbon atoms such as ethanol, or an alcohol aqueous solution, etc.

The spherical hyaluronic acid bead gel product from which the oil has been removed is washed several times in distilled water, an acidic solution, an aqueous solution to which a salt is add, and PBS to remove unreacted crosslinking agents and hydroxide ions.

The cleaning efficiency of the unreacted material may be increased by using aqueous solutions to which a salt is added, in which case a sodium chloride aqueous solution, a phosphoric acid aqueous solution, and a sodium chloride aqueous solution to which phosphate is added are most suitable.

The purified spherical hyaluronic acid bead gel may be swollen in PBS and sterilized at 121°C to finally prepare a spherical hyaluronic acid bead gel that may be applied to the living body. Alternatively, spherical hyaluronic acid bead gel may also be prepared by recovering the spherical hyaluronic acid bead gel in a precipitated state using an organic solvent or an organic solvent aqueous solution, drying it through nitrogen, air, heat, and reduced pressure, sorting the spherical hyaluronic acid bead gel by size shape according to the purpose of medicinal application, reswelling it in PBS, and sterilizing it at 121°C to finally prepare the spherical hyaluronic acid bead gel that may be applied to the living body.

The organic solvent or organic solvent aqueous solution used for precipitation of the spherical hyaluronic acid bead gel may be DMSO, DMF, acetonitrile, methanol, THF, acetone, an acetone aqueous solution, an alcohol having 2 to 6 carbon atoms such as ethanol, or an alcohol aqueous solution, etc.

The hyaluronic acid or a salt thereof crosslinked material prepared by the present disclosure may be separated and/or purified in various ways by other conventional methods known in the art, and representative examples of which include distillation (including distillation under atmospheric pressure and reduced pressure distillation), recrystallization, column chromatography, ion exchange chromatography, gel chromatography, affinity chromatography, thin layer chromatography, phase separation, solvent extraction, dialysis, washing, etc. The separation and/or purification may be carried out after each process or after a series of reactions in the preparation of hyaluronic acid derivative microbeads.

The resulting spherical hyaluronic acid bead gel according to the present disclosure may be sterilized at 121°C, has no adverse effects when introduced into the body, and may provide as provide physical properties that may be used as a filler for wrinkle removal, a cosmetic implant, joint injection, and anti-adhesive agent. Also, the spherical hyaluronic acid bead gel may be used as a drug delivery matrix or a cell carrier and may also be used as a vehicle to deliver specific drugs or cells to specific biological sites, and may also be used as a cell scaffold for tissue engineering, etc.

Hereinafter, the present disclosure will be described in detail by examples.

However, the following examples are only illustrative of the present disclosure, and the contents of the present disclosure are not limited by the following examples.

### [Mode for Invention]

### [Example 1] Preparation of spherical hyaluronic acid bead gel

Sodium hyaluronate (molecular weight: 1,000,000) at a concentration of 50 mg/ml was added to 200 mL of 0.25 N NaOH solution, and at the same time, 0.4032 g of butanediol diglycidyl ether (BDDE) was added thereto (Equivalence ratio of BDDE to hyaluronic acid repeating unit: 8 mol%). Mixing was performed using a planetary centrifugal mixer for 30 minutes, and then a mixed crosslinking reaction was carried out at 40°C for 1 hour. The reactant was dropped onto 600 g of MCT oil. A dispersed crosslinking reaction was carried out 40°C for 24 hours while stirring at a speed of 700 rpm.

After 24 hours, 800 ml of isopropanol was slowly added to recover the hyaluronic acid beads dispersed in the mixed solution. The recovered hyaluronic acid beads were washed 3 times with isopropanol. The recovered hyaluronic acid beads were washed 5 times with 5 L of PBS, respectively. 1 L of isopropanol was added to the washed hyaluronic acid beads and allowed to precipitate. This was repeated 3 times to replace isopropanol. 1.5 L of 30% isopropanol was added to the precipitate and allowed to swell for 1 hour. After swelling, this was repeated 3 times to replace isopropanol. The precipitates were washed again 5 times with 5 L of PBS, respectively.

Some of the washed spherical hyaluronic acid bead gels were swollen in PBS and then sterilized at 121°C to prepare spherical hyaluronic acid bead gels. Some of the other spherical hyaluronic acid bead gels were subjected to an organic solvent precipitation process, a nitrogen gas drying process, a classification process, a PBS reswelling process, and a sterilization process at 121° C to prepare spherical hyaluronic acid bead gels having a size and shape suitable for each application.

### [Example 2] Preparation of spherical hyaluronic acid bead gel

Sodium hyaluronate (molecular weight: 1,000,000) at a concentration of 50 mg/ml was added to 200 mL of 0.25 N NaOH solution, and at the same time, 0.4536 g of butanediol diglycidyl ether (BDDE) was added thereto (Equivalence ratio of BDDE to hyaluronic acid repeating unit: 9 mol%). Mixing was performed using a planetary centrifugal mixer for 30 minutes, and then a mixed crosslinking reaction was carried out at 40°C for 1 hour. The reactant was dropped onto 600 g of MCT oil. A dispersed crosslinking reaction was carried out 40°C for 24 hours while stirring at a speed of 700 rpm.

After 24 hours, 800 ml of isopropanol was slowly added to recover the hyaluronic acid beads dispersed in the mixed solution. The recovered hyaluronic acid beads were washed 3 times with isopropanol. The recovered hyaluronic acid beads were washed 5 times with 5 L of PBS, respectively. 1 L of isopropanol was added to the washed hyaluronic acid beads and allowed to precipitate. This was repeated 3 times to replace isopropanol. 1.5 L of 30% isopropanol was added to the precipitate and allowed to swell for 1 hour. After swelling, this was repeated 3 times to replace isopropanol. The precipitates were washed again 5 times with 5 L of PBS, respectively.

Some of the washed spherical hyaluronic acid bead gels were swollen in PBS and then sterilized at 121°C to prepare spherical hyaluronic acid bead gels. Some of the other spherical hyaluronic acid bead gels were subjected to an organic solvent precipitation process, a nitrogen gas drying process, a classification process, a PBS reswelling process, and a sterilization process at 121°C to prepare spherical hyaluronic acid bead gels having a size and shape suitable for each application.

### [Example 3] Preparation of spherical hyaluronic acid bead gel

Sodium hyaluronate (molecular weight: 1,000,000) at a concentration of 50 mg/ml was added to 166 mL of 0.25 N NaOH solution, and at the same time, 0.4183 g of butanediol diglycidyl ether (BDDE) was added thereto (Equivalence ratio of BDDE to hyaluronic acid repeating unit: 10 mol%). Mixing was performed using a planetary centrifugal mixer for 30 minutes, and then a mixed crosslinking reaction was carried out at 40°C for 1 hour. The reactant was dropped onto 332 g of MCT oil. A dispersed crosslinking reaction was carried out 40°C for 24 hours while stirring at a speed of 700 rpm.

After 24 hours, 500 ml of isopropanol was slowly added to recover the hyaluronic acid beads dispersed in the mixed solution. The recovered hyaluronic acid beads were washed 3 times with isopropanol. The recovered hyaluronic acid beads were washed 5 times with 5 L of PBS, respectively. 1 L of isopropanol was added to the washed hyaluronic acid beads and allowed to precipitate. This was repeated 3 times to replace isopropanol. 1.5 L of 30% isopropanol was added to the precipitate and allowed to swell for 1 hour. After swelling, this was repeated 3 times to replace isopropanol. The precipitates were washed again 5 times with 5 L of PBS, respectively.

Some of the washed spherical hyaluronic acid bead gels were swollen in PBS and then sterilized at 121°C to prepare spherical hyaluronic acid bead gels. Some of the other spherical hyaluronic acid bead gels were subjected to an organic solvent precipitation process, a nitrogen gas drying process, a classification process, a PBS reswelling process, and a sterilization process at 121°C to prepare spherical hyaluronic acid bead gels having a size and shape suitable for each application.

### [Comparative Example 1] Preparation of hyaluronic acid bead gel

Sodium hyaluronate (molecular weight: 1,000,000) at a concentration of 100 mg/ml was added to 100 mL of 0.25 N NaOH solution. The reactant was dropped onto 500 g of MCT oil. The reactant was stirred at a speed of 700 rpm. 44 g of butanediol diglycidyl ether (BDDE) as a crosslinking agent was added. The reaction was carried out at 27°C for 24 hours.

After 24 hours, 500 ml of isopropanol was slowly added to recover the hyaluronic acid beads dispersed in the mixed solution. The recovered hyaluronic acid beads were washed 3 times with isopropanol. The recovered hyaluronic acid beads were washed 2 times with 2 L of distilled water, respectively. 1 L of isopropanol was added to the washed hyaluronic acid beads and allowed to precipitate. This was repeated 3 times to replace isopropanol. The precipitates were washed again 2 times with 5 L of distilled water, respectively.

The washed hyaluronic acid bead gel was swollen in PBS and then sterilized at 121°C to prepare a hyaluronic acid bead gel.

### [Comparative Example 2] Preparation of hyaluronic acid bead gel

A hyaluronic acid bead gel was prepared in the same manner as in Comparative Example 1, except that 49.5 g of butanediol diglycidyl ether (BDDE) as a crosslinking agent was added.

### [Comparative Example 3] Preparation of hyaluronic acid bead gel

A hyaluronic acid bead gel was prepared in the same manner as in Comparative Example 1, except that 59.4 g of butanediol diglycidyl ether (BDDE) as a crosslinking agent was added.

### [Comparative Example 4] Preparation of hyaluronic acid bead gel

Sodium hyaluronate (molecular weight: 1,000,000) at a concentration of 100 mg/ml was added to 100 mL of 0.25 N NaOH solution. Dissolution was performed overnight at 10°C. 2 g of butanediol diglycidyl ether (BDDE) as a crosslinking agent was added. The reactant was dropped onto 900 g of olive oil. The reactant was stirred at a speed of 700 rpm. The reaction was carried out at 25°C for 4 days. After 4 days, 500 ml of acetone was slowly added to recover the hyaluronic acid beads dispersed in the mixed solution. The recovered hyaluronic acid beads were washed 3 times with 70% acetone. The recovered hyaluronic acid beads were washed 2 times with 5 L of distilled water, respectively.

The washed hyaluronic acid bead gel was swollen in PBS and then sterilized at 121°C to prepare a hyaluronic acid bead gel.

### [Comparative Example 5] Preparation of hyaluronic acid bead gel

Sodium hyaluronate (molecular weight: 1,000,000) at a concentration of 100 mg/ml was added to 100 mL of 0.25 N NaOH solution, and at the same time, 0.5040 g of butanediol diglycidyl ether (BDDE) was added thereto (Equivalence ratio of BDDE to hyaluronic acid repeating unit: 10 mol%) . Mixing was performed using a planetary centrifugal mixer for 30 minutes, and then a mixed crosslinking reaction was carried out at 40°C for 1 hour. The reactant was dropped onto 200 g of isopropanol. A dispersed crosslinking reaction was carried out 40°C for 24 hours while stirring at a speed of 700 rpm.

After 24 hours, the dispersed hyaluronic acid beads were recovered. The recovered hyaluronic acid beads were washed 3 times with isopropanol. The recovered hyaluronic acid beads were washed 5 times with 5 L of PBS, respectively.

The washed hyaluronic acid bead gel was pulverized and sterilized at 121°C to prepare a hyaluronic acid bead gel.

[Experimental Example] Comparison of physical properties of spherical hyaluronic acid bead gels prepared in Examples 1, 2, and 3

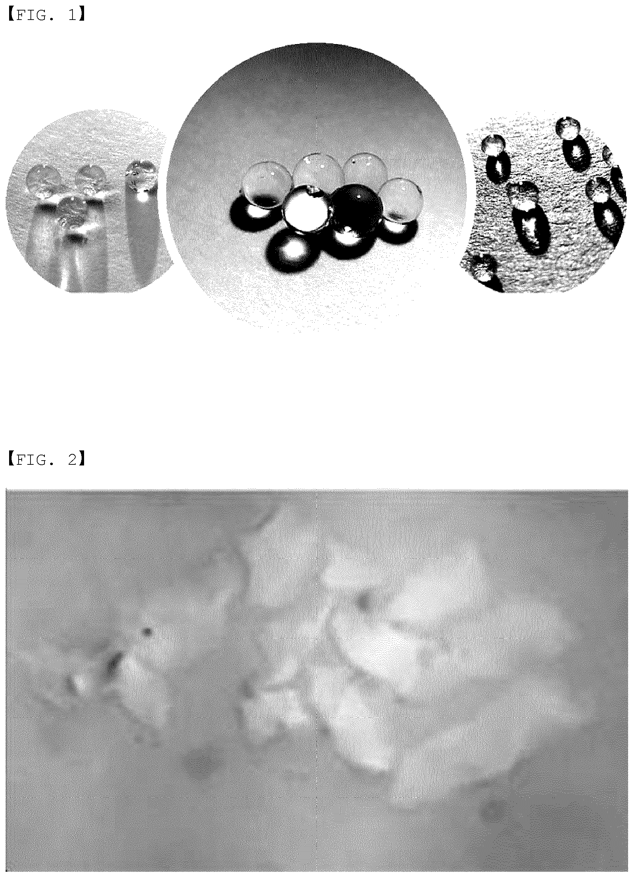

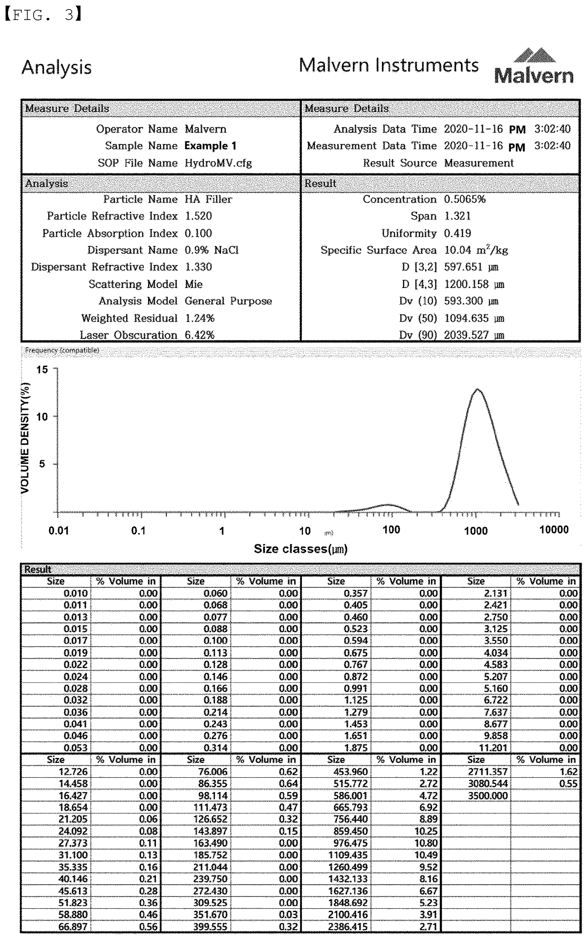

It was confirmed that the hyaluronic acid bead gels prepared in Examples 1, 2, and 3 were spherical (FIG. 1), whereas the hyaluronic acid bead gel prepared in Comparative Example 5 was a formulation that was generally prepared and showed an amorphous shape (FIG. 2). Particle sizes measured through particle size analysis confirmed spherical beads with values of 1,200.158 µm for Example 1, 1,202.167 µm for Example 2, and 770.189 µm for Example 3 (FIGS. 3, 4, and 5).

**Referring to** **FIG. 3****,** it can be seen that **Dv (10) is 593.3 µm, Dv (50) is 1,094.635 µm, and Dv (90) is 2,039.527 µm**, with a high swelling (9,610%) as shown in Table 1, while maintaining a uniform spherical bead shape.

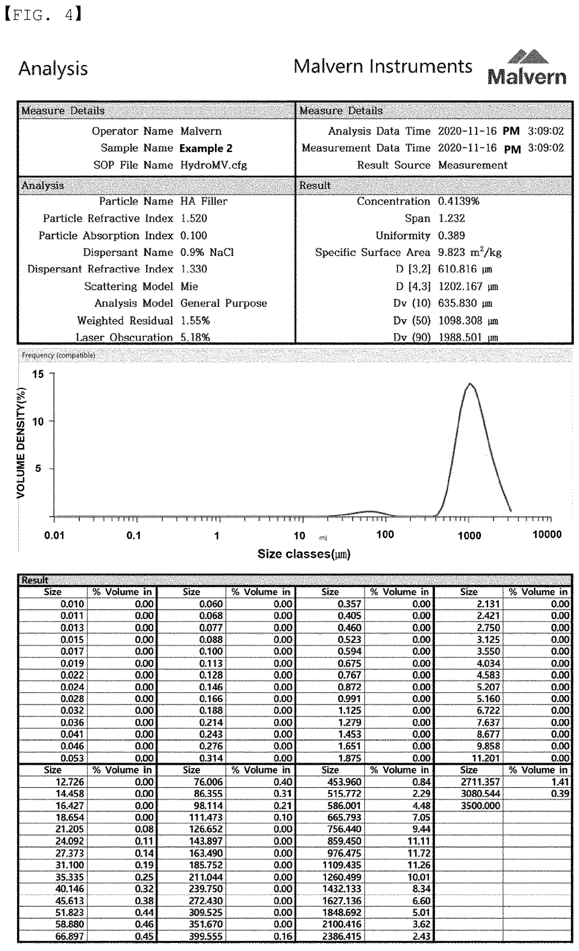

**Referring to** **FIG. 4****,** it can be seen that **Dv (10) is 635.83 µm, Dv (50) is 1,098.308 µm, and Dv (90) is 1,988.501 µm,** with a high swelling (8,750%) as shown in Table 1, while maintaining a uniform spherical bead shape.

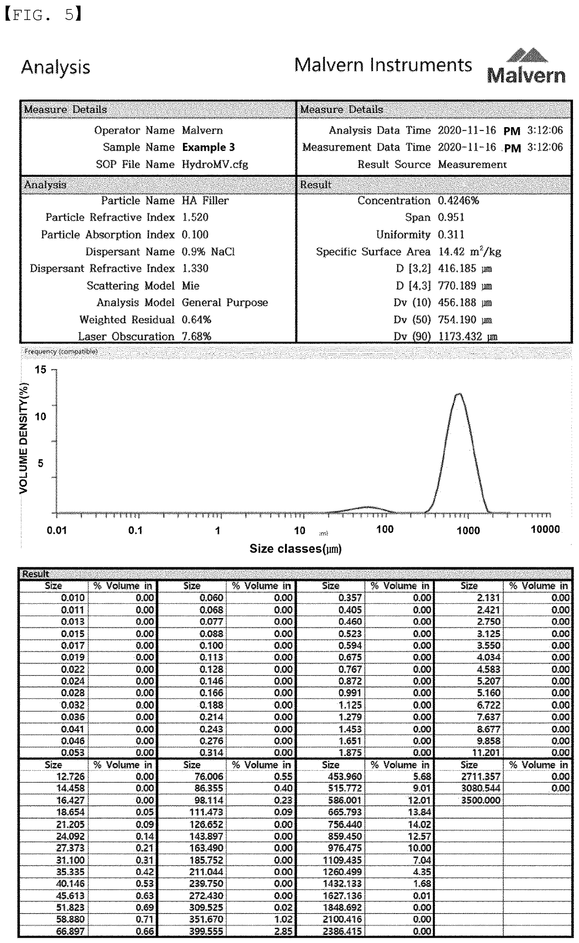

**Referring to** **FIG. 5**, it can be seen that **Dv (10) is 456.188 µm, Dv (50) is 754.190 µm, and Dv (90) is 2039.527 µm,** with a high swelling (4,771%) as shown in Table 1, while maintaining a uniform spherical bead shape.

The swelling of the spherical hyaluronic acid bead gels prepared in Examples 1, 2, and 3 and Comparative Examples 2 and 3 was measured. The swelling refers to a value obtained by dividing the weight of the swollen state in PBS by the weight of the dry state and multiplying it by 100. Therefore, it could be confirmed that the spherical hyaluronic acid bead gel had a high swelling of 771 to 9,610% and maintained its spherical shape well.

Such a high swelling property was achieved through an advanced three-step purification method beyond dispersion, which allows the crosslinking reaction to be performed by dispersion with high efficiency while using a small amount of crosslinking agent.

On the other hand, the beads prepared in Comparative Examples 2 and 3 have a disadvantage in that their swelling is too low, at about 250 to 2,000%, which may lead to safety issues for application within the human body.

**[Table 1] Swelling of spherical hyaluronic acid bead gels**

| | Example 1 | Example 2 | Example 3 | Comp. Example 1 | Comp. Example 2 | Comp. Example 3 | Comp. Example 4 |
|---|---|---|---|---|---|---|---|
| Swelling (%) | 9,610 | 8,750 | 4,771 | 500 | 400 | 250 | 2,000 |

As shown in Table 1, in the present disclosure, it was possible to prepare a spherical hyaluronic acid bead gel with a swelling of 4,500 to 10,000% through a two-step crosslinking reaction. When such a swelling is achieved, the hyaluronic acid gel becomes much softer and may significantly reduce irritation when applied subcutaneously. On the other hand, when a swelling of the hyaluronic acid bead gel is about 250 to 2,000%, as shown in Comparative Examples 1 to 4, hyaluronic acid bead gels are too hard to be applied to the human body, which can cause irritation when applied subcutaneously, leading to diseases such as inflammation. Therefore, there is a possibility that safety problems may arise when applied in the human body.

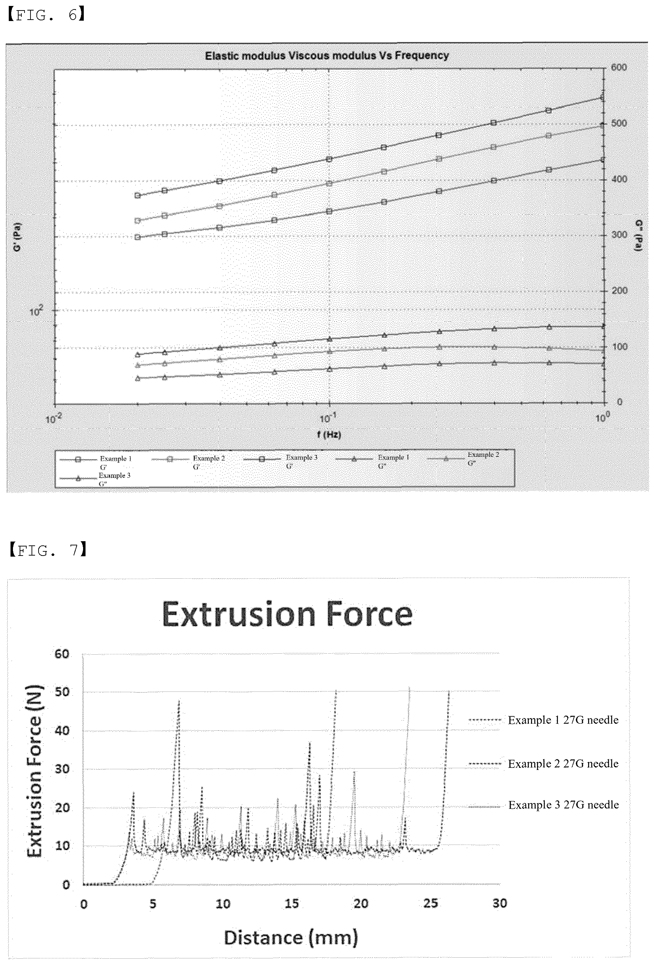

To confirm the rheological properties of the spherical hyaluronic acid bead gels prepared in Examples 1, 2, and 3, the viscoelasticity (complex modulus, storage modulus, loss modulus) was measured after sterilization at a frequency of 0.02 to 1 Hz using a rheometer. As a result, the spherical hyaluronic acid bead gels show similar values to major products currently sold in the market, and are expected to show appropriate usability, safety, and performance (FIG. 6).

**Referring to** **FIG. 6****, it can be seen that since a storage modulus is maintained at a higher value than a loss modulus in an entire range of 1 to 0.02 Hz, the spherical hyaluronic acid bead gels have a high modulus, showing excellent viscoelasticity with excellent shape retention, and as the crosslinking rate increases, the complex modulus increases from 312.3 to 501.8.**

On the other hand, in order to show excellent performance as a material for tissue repair with a gel type, the complex modulus and storage modulus are preferably maintained at about 300 or more to 550 (Pa), and the loss modulus is preferably maintained at 70 or more and less than 150 (Pa) in order to suit a high complex modulus and storage modulus, which are advantages of a biphasic type, and a high storage modulus compared to a loss modulus, which is an advantage of a monophasic type.

**[Table 2] Comparison of rheological properties of spherical hyaluronic acid bead gels**

| Rheology property (1 Hz) | Example 1 | Example 2 | Example 3 |
|---|---|---|---|
| Complex modulus (G*, Pa) | 312.3 | 402.6 | 501.8 |
| storage modulus (G', Pa) | 304.3 | 391.5 | 482.7 |
| Loss modulus (G", Pa) | 70.47 | 94.00 | 137.3 |

The spherical hyaluronic acid bead gels prepared in Examples 1, 2, and 3 were a biphasic type. In each of examples in [Table 2] above, it was founded that the complex modulus was maintained at 300 to 510 (Pa), the storage modulus was maintained at 300 to 500 (Pa). Pa), and the loss modulus was maintained at 70 to 140 (Pa). The existing biphasic type amorphous gel has high complex modulus and storage modulus of about 400 to 550 (Pa), while its loss modulus has a high value of about 150 to 350 (Pa). Thus, the existing biphasic type amorphous gel may have a relatively low ratio of storage modulus to loss modulus, resulting in low elasticity and resilience.

The spherical hyaluronic acid bead gel prepared in the present disclosure had with a loss modulus maintained at 70 or more and less than 150 (Pa) and a loss modulus to a storage modulus of 1:15/7 to 1:50/7, which is a relatively higher storage modulus compared to the loss modulus compared to the existing biphasic type amorphous gel.

Therefore, the spherical hyaluronic acid bead gel according to the present disclosure exhibits a high complex modulus and storage modulus, while exhibiting a low loss modulus compared to existing biphasic type amorphous gels, and thus may exhibit excellent performance as a material for tissue repair.

The results of measuring the extrusion force of the spherical hyaluronic acid bead gels prepared in Examples 1, 2, and 3 are shown in FIG. 7. Referring to FIG. 7, when injected into the treatment area with a commonly used needle, a low and uniform extrusion force may show excellent advantages in usability. In the case of Example 1, the extrusion force was 9.85 ± 3.64 N with a 27G needle, in the case of Example 2, the extrusion force was 9.45 ± 2.79 N with a 27G needle, and in the case of Example 3, the extrusion force was 9.69 ± 3.18N with a 27G needle. Therefore, the spherical hyaluronic acid bead gels prepared in Examples 1, 2, and 3 had a low extrusion force compared to the extrusion force of 10 to 20 N value of the major products currently sold in the market, resulting in excellent usability.

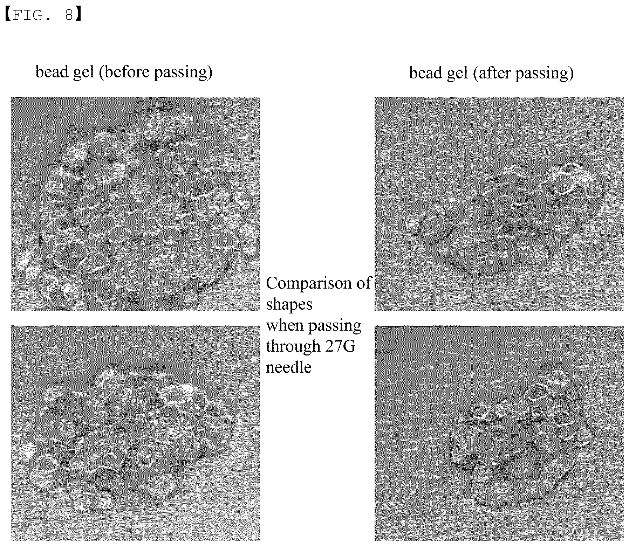

Referring to FIG. 8, it can be confirmed that the spherical hyaluronic acid bead gels prepared in Examples 1, 2, and 3 did not change in shape even after passing through a 27G needle and maintained their spherical shape well. From this, it can be seen that the shape of the spherical bead does not break even after the treatment with the needle, even at the maximum pressure output of 50 N in FIG. 7, and the elasticity of the bead gel is excellent enough to maintain the spherical shape, so it is possible to maintain the spherical shape even when external shock is applied at the treatment area.

In addition, it is desirable to add the step of sterilizing the hyaluronic acid bead gel that has undergone the swelling step by swelling it again in an isotonic solution such as PBS, separating it according to size and preparing it alone or in a mixed preparation, or recovering it as a precipitate in an organic solvent or an aqueous solution of an organic solvent, drying it through nitrogen, air, heat, or reduced pressure, separating it according to shape or size according to the purpose of application, and sterilizing it by reswelling it in an isotonic solution such as PBS.

The spherical hyaluronic acid bead gel according to the present disclosure, which has various physical properties depending on the concentration of hyaluronic acid, the amount of crosslinking agent, alkali concentration, reaction temperature, reaction time, etc., has a transparent and uniform spherical shape, has a high swelling and excellent biocompatibility, is stable against heat and enzymes, and exhibits excellent viscoelasticity.

Furthermore, the present disclosure may stably obtain bead gels of various sizes by adjusting the ratio of various oils and hyaluronic acid solutions without using emulsifiers, surfactants, solubilizers, etc. Also, in order to maintain the spherical shape in the obtaining step, the present disclosure does not use a method of adding synthetic polymers such as PLGA and PCL, which are shell-forming materials, a method of preparing insoluble precipitates through ionic bonding, a method of precipitating in organic solvents, etc., but maintains the spherical shape through dispersed crosslinking in a hyaluronic acid solution dispersed in an oil phase without additives.

As such, the hyaluronic acid bead gel according to the present disclosure is transparent, has high swelling, and exhibits uniform quality properties. Therefore, the spherical hyaluronic acid bead gel according to the present disclosure may be used as a filler for wrinkle removal, an implant, a drug delivery matrix, a cell carrier, a cell scaffold, a joint injection, a cosmetic product, etc.

## Claims

1. A hyaluronic acid bead gel that has a swelling of 4,500% to 10,000% and is uniform and spheical shape, the hyaluronic acid bead gel being prepared through a two-step crosslinking reaction of a mixed crosslinking reaction step and a dispersed crosslinking reaction step, and a three-step purification reaction,
wherein a ratio of a reaction time in the mixed crosslinking reaction step to a reaction time in the dispersed crosslinking step is 1:24 to 1:72.

2. The hyaluronic acid bead gel of claim 1, wherein the mixed crosslinking reaction step is a reaction step of obtaining a reactant by adding hyaluronic acid or a salt thereof to an alkaline aqueous solution, adding a crosslinking agent, and then homogeneously mixing and reacting them with each other, and
the dispersed crosslinking reaction step is a step of forming covalent crosslinking bonds by stirring the reactant with oil.

3. The hyaluronic acid bead gel of claim 2, wherein the crosslinking agent in the mixed crosslinking reaction step is added in an amount rangin from 1 to 30 equivalent % based on a repeating unit of the hyaluronic acid or a salt thereof.

4. The hyaluronic acid bead gel of claim 2, wherein a concentration of the hyaluronic acid or a salt thereof in the reactant in the mixed crosslinking reaction step is added in a range of 1 to 30% by weight based on the 0.1 to 10 N alkaline aqueous solution.

5. The hyaluronic acid bead gel of claim 2, wherein in the dispersed crosslinking reaction step, a weight ratio of the alkaline aqueous solution of the hyaluronic acid or a salt thereof to which the crosslinking agent is added and the oil is in the range of 1:1 to 1:9, preferably from 1:1 to 1:3.

6. The hyaluronic acid bead gel of claim 2, wherein the crosslinking agent is one or more selected from the group consisting of 1,4-butandiol diglycidyl ether (BDDE), ethylene glycol diglycidyl ether (EGDGE), 1,6-hexanediol diglycidyl ether, propylene glycol diglycidyl ether, polypropylene glycol diglycidyl ether, polytetramethylene glycol diglycidyl ether, neopentyl glycol diglycidyl ether, polyglycerol polyglycidyl ether, diglycerol polyglycidyl ether, glycerol polyglycidyl ether, tri-methylpropane polyglycidyl ether, 1,2-(bis(2,3-epoxypropoxy)ethylene), pentaerythritol polyglycidyl ether, and sorbitol polyglycidyl ether.

7. The hyaluronic acid bead gel of claim 2, wherein the oil is one or more selected from the group consisting of mineral oil, medium chain triglycerides, menhaden oil, linseed oil, coconut oil, cod oil, soya bean oil, whale oil, cotton seed oil, sesame seed oil, peanut oil, olive oil, lard oil, palms oil, corn oil, rapeseed oil, bone oil, china wood oil, and castor oil.

8. The hyaluronic acid bead gel of claim 1, wherein the three-step purification reaction includes:
(a) a first purification step of washing a spherical gel prepared that has udergone the dispersed crosslinking reaction step using one or more selected from distilled water, an acidic solution, an aqueous solution to which an acidic salt is added, and PBS;
(b) a second purification step of washing the hyaluronic acid bead gel that has undergone the first purification step with an organic solvent aqueous solution; and
(c) a third purification step of washing the hyaluronic acid bead gel that has undergone the second purification step using one or more selected from distilled water, an acidic solution, an aqueous solution to which an acidic salt is added, and PBS.

9. The hyaluronic acid bead gel of claim 8, wherein the organic solvent is one or more selected from DMSO, DMF, acetonitrile, methanol, THF, acetone, an acetone aqueous solution, and an alcohol having 2 to 6 carbon atoms.

10. The hyaluronic acid bead gel of claim 8, wherein in the organic solvent aqueous solution used in the second purification step, a weight ratio of distilled water to an organic solvent is in a range of 9:1 to 1:9.
